# EUROPÄISCHE PATENTSCHRIFT

(11) **EP 3 517 461 B1**
(45) Veröffentlichungstag und Bekanntmachung des Hinweises auf die Patenterteilung: **18.08.2021**
(21) Anmeldenummer: 18153837.2
(22) Anmeldetag: 29.01.2018
(51) Int. Cl.: B65G 21/20

(54) **MAGNETFÖRDEREINRICHTUNG**
MAGNETIC CONVEYING DEVICE
DISPOSITIF DE TRANSPORT MAGNÉTIQUE

(43) Veröffentlichungstag der Anmeldung: 31.07.2019
(73) Patentinhaber: Neuhäuser GmbH, 44532 Lünen (DE)
(72) Erfinder: WEISCHENBERG, Tobias, 44532 LÜNEN (DE)
(74) Vertreter: Andrejewski - Honke Patent- und Rechtsanwälte Partnerschaft mbB

(56) Entgegenhaltungen:
- EP-A1- 0 540 768
- DE-U1-202014 102 796
- FR-A1- 2 561 217
- US-A- 4 351 430
- US-A- 4 643 298
- US-A1- 2008 000 998

## Beschreibung

Die Erfindung betrifft eine Fördereinrichtung, insbesondere Magnetfördereinrichtung, zum Transport von vorzugsweise plattenförmigen Gegenständen, mit mehreren in Förderrichtung hintereinander angeordneten Magnethalteelementen, ferner mit zumindest einem an den Magnethalteelementen vorbeilaufenden Förderband, und mit einem zwischen den Magnethalteelementen und dem Förderband angeordneten Führungselement für das Förderband wobei das Führungselement als die Magnethalteelemente mit Abstand übergreifende Führungskappe ausgebildet ist.

Fördereinrichtungen für plattenförmige Gegenstände sind vielfältig aus der Praxis bekannt und werden typischerweise für den hängenden oder auch aufliegenden Transport von Blechen als plattenförmige Gegenstände eingesetzt. Bei den Blechen kann es sich um Gehäusebleche für beispielsweise Haushaltsmaschinen, Stanzteile in der Automobilindustrie, Dosendeckel etc. handeln. Derartige plattenförmige Gegenstände sind ferromagnetisch ausgelegt und können mit Hilfe von als Magnethalteelemente ausgebildeten Halteelementen an das vorbeilaufende Förderband angelegt und zielgenau abgeworfen bzw. freigegeben werden. Dazu wird in der Regel mit schaltbaren Elektromagneten als Magnethalteelemente gearbeitet. Daneben können aber auch Permanentmagnete eingesetzt werden.

Sofern nichtferromagnetische Werkstoffe wie beispielsweise Glasplatten, Holzplatten, Kunststoffplatten etc. mit Hilfe einer solchen Fördereinrichtung transportiert werden sollen, sind die Halteelemente als Unterdruckhalteelemente ausgerüstet. In der Regel werden kombinierte Fördereinrichtungen im Stand der Technik beispielsweise nach der EP 0 893 372 A1 oder auch gemäß der DE 10 2005 001 568 A1 verwendet. Mit Hilfe solcher kombinierten Fördereinrichtungen lassen sich sowohl ferromagnetische als auch nichtferromagnetische Platten transportieren und zielgenau abwerfen bzw. freigeben.

In der Praxis ist man bestrebt, die Fördergeschwindigkeit zu erhöhen, um insgesamt den Durchsatz an beispielsweise zu bearbeitenden Stanzteilen für die Automobilindustrie zu steigern. Als Folge dieser wachsenden Fördergeschwindigkeiten werden elektrostatische Aufladungen beobachtet, die sich primär auf die Reibung zwischen dem Förderband und dem Führungselement zurückführen lassen. Aus diesem Grund werden im Stand der Technik nach der EP 2 576 403 B1 bereits Ansätze dahingehend verfolgt, das als Führungselement realisierte Führungsleisten mit einer Metallbeschichtung und/oder einer solchen aus Kunststoff ausgerüstet werden. Außerdem ist zusätzlich die Oberseite des Förderbandes, d. h., die den Gegenständen abgewandte und den Halteelementen zugewandte Seite mit einer vollflächigen sowie antistatischen Beschichtung ausgerüstet. Das hat sich vielfältig in der Praxis bewährt.

Denn auf diese Weise konnten Probleme durch elektrostatische Aufladungen zuverlässig verringert oder sogar gänzlich vermieden werden. Allerdings sind mit den gesteigerten Fördergeschwindigkeiten noch weitere Anforderungen verbunden. Typischerweise verfügen solche Fördereinrichtungen über Längen, die in der Praxis mehrere Meter betragen können. Solche Längen werden dadurch abgebildet und beherrscht, dass einzelne Fördereinrichtungen in Längsrichtung aneinandergesetzt und miteinander gekoppelt werden. Hierzu sei beispielhaft auf die DE 196 36 086 A1 verwiesen.

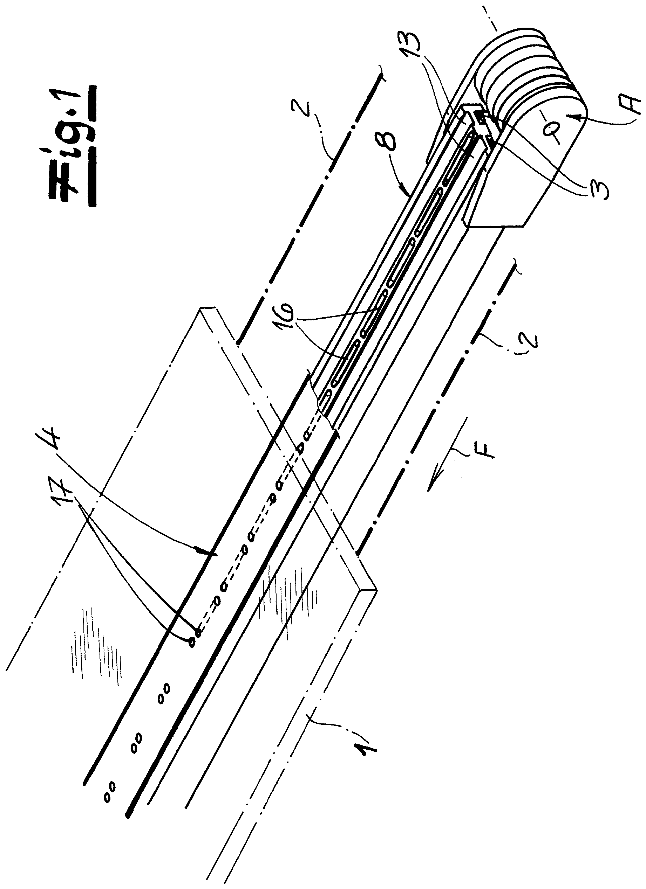

Wie dort beispielsweise in der Fig. 1 dargestellt, kommen jeweils in Längsrichtung verlaufende und aneinander anschließende Halteelemente und Halteleisten zum Einsatz, die vorliegend dafür sorgen, dass das Förderband nicht nach unten durchhängen kann. Die fraglichen Halteelemente bilden im Übergangsbereich von einem zum nächsten Magnethalteelement Stoßbereiche. Das gleiche gilt für die Führungsleisten, wie sie bei der EP 2 576 403 B1 eingesetzt werden. In Verbindung mit den wachsenden Fördergeschwindigkeiten des Förderbandes wird nun ein zunehmender Verschleiß der Förderbänder beobachtet, und zwar trotz der speziellen und in der EP 2 576 403 B1 beschriebenen Metallbeschichtung der Führungsleisten. Dieser Verschleiß lässt sich im Kern auf die Stoßbereiche bzw. Stoßstellen zurückführen, die im Endeffekt das hieran entlanggeführte Förderband abrasiv beaufschlagen.

Der gattungsbildende Stand der Technik nach der US 4 351 430 beschäftigt sich mit einer Fördereinrichtung, die mit Permanentmagneten ausgerüstet ist und beispielhaft für den Transport von Dosen eingesetzt wird. Außerdem ist eine die Permanentmagneten übergreifende Führungskappe realisiert. Details zur Führungskappe werden nicht beschrieben.

Beim Stand der Technik müssen bei Verschleiß das Förderband und/oder die Führungsleisten oder Halteleisten ausgetauscht werden. Das ist einerseits kostspielig und andererseits mit hohem Montageaufwand verbunden. Denn die Halteleisten sind im Stand der Technik mit den zugehörigen Halteelementen bzw. Magnethalteelementen größtenteils mechanisch verbunden, sodass im Regelfall ein Komplettaustausch erforderlich ist. - Hier will die Erfindung insgesamt Abhilfe schaffen.

Der Erfindung liegt das technische Problem zugrunde, eine derartige Förderleinrichtung so weiterzuentwickeln, dass insbesondere der durch Stoßstellen verursachte Verschleiß an Förderbändern verringert wird.

Zur Lösung dieser technischen Problemstellung ist eine Fördereinrichtung nach Anspruch 1 vorgesehen.

Nach vorteilhafter Ausgestaltung kann es sich bei der Führungskappe um eine Führungskappenleiste mit einer Länge von bis zu 10 m oder noch mehr handeln.

Als Folge hiervon müssen das Förderband und/oder die Führungsleisten oder Halteleisten ausgetauscht werden. Das ist einerseits kostspielig und andererseits mit hohem Montageaufwand verbunden. Denn die Halteleisten sind im Stand der Technik mit den zugehörigen Halteelementen bzw. Magnethalteelementen mechanisch verbunden, so dass im Regelfall ein Komplettaustausch erforderlich ist. - Hier will die Erfindung insgesamt Abhilfe schaffen.

Auf diese Weise wird zunächst einmal das zuvor bereits beschriebene Problem der Stoßstellen auf ein Minimum reduziert. Denn durch den Rückgriff auf die als Führungskappenleiste ausgebildete Führungskappe lassen sich beispielsweise mit Hilfe einer einzigen Führungskappenleiste eine Mehrzahl an Magnethalteelementen übergreifen und zum Förderband hin abschließen. Da darüber hinaus die Führungskappe die betreffenden Magnethalteelemente mit Abstand übergreift, kann die Führungskappe bzw. Führungskappenleiste über einer Vielzahl der Magnethalteelemente hinweg angeordnet und im Bedarfsfall problemlos ausgetauscht werden.

Denn der Übergriff mit Abstand gleicht etwaige Fertigungstoleranzen aus. Von besonderer Bedeutung ist darüber hinaus, dass die gemeinsame Führungskappenleiste für mehrere Magnethalteelemente im Bedarfsfall problemlos ausgetauscht werden kann, und zwar ohne dass die Magnethalteelemente selbst hiervon beeinträchtigt werden. Denn dadurch, dass die Führungskappe die Magnethalteelemente mit Abstand übergreift, können die Magnethalteelemente am Platz verbleiben und lässt sich die Führungskappe bzw. Führungskappenleiste hiervon unabhängig austauschen und gegen beispielsweise ein Neuteil oder ein revidiertes Teil ersetzen.

Das hat ferner zur Folge, dass ein anschließendes Ausrichten der Führungskappen zueinander in der Regel nicht (mehr) erforderlich ist. Auch der der Montageaufwand ist verringert, weil die Führungskappe unabhängig von den Magnethalteelementen ausgetauscht wird und beispielsweise zuvor erforderliche Schweißarbeiten, Verschraubungen etc. zwischen Führungskappe und Magnethalteelement entfallen. Hierbei geht die Erfindung insgesamt von der Erkenntnis aus, dass solche Magnethalteelemente typischerweise eine Maximallänge von ca. 0,5 bis 0,8 m aufweisen, wohingegen die Führungskappenleiste vorzugsweise eine Gesamtlänge von bis zu 10 m oder mehr aufweisen kann. Dadurch lassen sich von einer einzigen Führungskappenleiste bis zu 20 Magnethalteelemente oder noch mehr gemeinsam übergreifen und zusammenfassen.

Die Anzahl etwaiger Stoßstellen wird also im Vergleich zum Stand der Technik drastisch verringert. Ohnehin sind solche Stoßstellen nur noch dann vorhanden, wenn Gesamtlängen für eine solche Fördereinrichtung von mehr als 10 m abgebildet werden müssen. Dadurch entfällt auch das bei der Erstmontage und bei der Reparatur erforderliche Ausrichten der einzelnen Magnethalteelemente und der zugehörigen Führungselemente zueinander, wie dies bisher im Stand der Technik unvermeidbar war. Hierin sind die wesentlichen Vorteile zu sehen.

Die Führungskappe verfügt in der Regel über zumindest einen Aufnahmeraum für ein oder mehrere Magnethalteelemente. Außerdem ist die Führungskappe meistens mit wenigstens einer Aussparung für hierin eingreifende Zähne des Förderbandes ausgerüstet. Das heißt, bei dem Förderband handelt es sich vorteilhaft um einen Zahnriemen. Das gilt selbstverständlich nur beispielhaft und ist nicht einschränkend gemeint.

In diesem Zusammenhang hat sich eine Auslegung dergestalt als besonders günstig erwiesen, dass sich der betreffende Aufnahmeraum und die Aussparung gegenüberliegen. Meistens sind zwei Aufnahmeräume und zwei Aussparungen sich gegenüberliegend in der Führungskappe vorhanden. Die paarweise sich gegenüberliegenden Aufnahmeräume und Aussparungen mögen dabei insgesamt symmetrisch zu einer Zentralebene angeordnet sein.

Von besonderer Bedeutung für die Erfindung ist darüber hinaus, dass die Führungskappe aus stranggepresstem Aluminium hergestellt ist. Auf diese Weise lassen sich einerseits die zuvor bereits angesprochenen Längen für die Führungskappenleiste von bis zu 10 m realisieren. Andererseits kann die Führungskappenleiste nach wie vor einwandfrei gehandhabt werden, weil Aluminium aufgrund seines geringen spezifischen Gewichtes für die beschriebene Anwendung prädestiniert ist. Das gilt erst recht vor dem Hintergrund, dass Aluminium nicht magnetisierbar ist, so dass bei einem Rückgriff auf Magnethalteelemente eine etwaige Beeinflussung des magnetischen Flusses und folglich der auf die zu transportierenden Platten ausgeübten Magnetkräfte hierdurch nicht zu befürchten ist.

Von weiterer besonderer Bedeutung für die Erfindung ist der Umstand, dass die Führungskappe mit einer reibungsmindernden Beschichtung zumindest an ihrer dem Förderband zugewandten Oberseite ausgerüstet ist. Meistens wird man die Führungskappe insgesamt mit einer solchen reibungsmindernden Beschichtung ausrüsten. Von weiterer besonderer Bedeutung für die Erfindung ist der Umstand, dass die Führungskappe mit der reibungsmindernden Beschichtung zumindest an ihrer dem Förderband zugewandten Oberseite ausgerüstet ist. Meistens wird man die Führungskappe insgesamt mit einer solchen reibungsmindernden Beschichtung ausrüsten.

Die reibungsmindernde Beschichtung ist erfindungsgemäß als Oxydschicht und/oder Flammspritzschicht aus-gebildet. Die Schictdicke der reibungsmindernden Beschichtung liegt ferner und im Allgemeinen bei weniger als 100 µm. Da die Führungskappe bzw. Führungskappenleiste erfindungsgemäß aus stranggepresstem Aluminium hergestellt ist, handelt es sich bei der Oxidschicht im Allgemeinen um eine Aluminiumoxidschicht. Diese wird im Regelfall elektrolytisch hergestellt. Das heißt, für die Realisierung der reibungsmindernden Beschichtung wird die Führungskappe bzw. Führungskappenleiste aus stranggepresstem Aluminium anodisch in einem kalten und sauren Elektrolyten oxidiert.

Durch angelegten Strom wird hierbei auf der Werkstückoberfläche der Führungskappe eine keramikähnliche Aluminiumoxidschicht gebildet. Diese Aluminiumoxidschicht verfügt über einen starken Verbund mit dem Grundmaterial und ist daher in der Lage, die zuvor angegebene Vickershärte realisieren und darstellen zu können. Zugleich werden hierdurch besondere reibungsoptimierte Eigenschaften erreicht.

Tatsächlich werden Reibzahlen von lediglich 0,4 zwischen der fraglichen reibungsmindernden Beschichtung und beispielsweise einem Stahlstift bei Gleitreibung beobachtet. Diese Reibzahlen können noch für den Fall deutlich reduziert werden, dass das Förderband bzw. der an dieser Stelle typischerweise eingesetzte Zahnriemen aus einem thermoplastischen Kunststoff wie beispielsweise Polyurethan hergestellt wird.

Kommt dann noch eine antistatische Ausrüstung des Förderbandes an seiner Oberseite, d. h. an seiner den plattenförmigen Gegenständen abgewandten und den Halteelementen bzw. der Führungskappe zugewandten Seite zum Einsatz, so werden Reibzahlen für die Gleitreibung von weniger als 0,2 und insbesondere weniger als 0,1 zwischen dem Förderband und der Führungskappe beobachtet. Grundsätzlich können sogar Reibzahlen von weniger als 0,05 erreicht werden. Die spezielle Ausrüstung des Förderbandes bzw. Förderriemens oder des Zahnriemens mag dabei mit Hilfe eines Kunststoffgewebes erfolgen, wie dies explizit in der gattungsbildenden EP 2 576 403 B1 beschrieben worden ist, auf die ausdrücklich verwiesen sei. Jedenfalls werden unter Rückgriff auf den in bekannter Weise ausgerüsteten Zahnriemen in Verbindung mit der erfindungsgemäß eingesetzten reibungsmindernden Beschichtung der Führungskappe nicht nur besonders geringe Reibzahlen beobachtet, sondern praktisch auch kein Verschleiß (mehr) an nicht vorhandenen Stoßstellen.

Als weiterer Vorteil hat sich in diesem Zusammenhang erwiesen, dass die Führungskappe bzw. Führungskappenleiste aus Aluminium besonders einfach bearbeitet werden kann. Das gilt nicht nur für den Aufnahmeraum für die Magnethalteelemente und die Aussparung für die hierin eingreifenden Zähne des Förderbandes, sondern auch und insbesondere für den Fall, dass die Fördereinrichtung sowohl für den Transport ferromagnetischer plattenförmiger Gegenstände als auch von nichtferromagnetischen plattenförmigen Gegenständen eingesetzt werden soll. In letztgenanntem Fall wird zu diesem Zweck die Führungskappe mit Bohrungen oder allgemein Öffnungen ausgerüstet, über welche ein entsprechend modifizierter Förderriemen bzw. ein Förderband mit in Längsrichtung verlaufender Lochung einen zum Festhalten der Gegenstände erforderlichen Unterdruck aufbaut. Zu diesem Zweck wird zusätzlich oder alternativ zu Magnethalteelementen mit Unterdruckhalteelementen gearbeitet, die in Längsrichtung wechselweise hintereinander angeordnet sein können. Jedenfalls lässt sich die Führungskappe unschwer auch an derartige Einsatzzwecke anpassen.

Hinzu kommt, dass im Allgemeinen mit einer gleich ausgelegten Führungskappe sowohl für reine Magnetfördereinrichtungen mit Magnethalteelementen als auch für kombinierte Magnet/Unterdruckfördereinrichtungen gearbeitet wird. Dadurch kann die Lagerhaltung vereinfacht werden. Auch die Herstellung ist vereinfacht, weil nur noch auf eine Version der Führungskappe zurückgegriffen zu werden braucht. Hierin sind die wesentlichen Vorteile zu sehen. Im Folgenden wird die Erfindung anhand einer lediglich ein Ausführungsbeispiel darstellenden Zeichnung näher erläutert; es zeigen:
- **Fig. 1**: die erfindungsgemäße Fördereinrichtung in einer Perspektivdarstellung mit teilweise abgenommenem Förderband,
- **Fig. 2**: den Gegenstand nach Fig. 1 im Querschnitt und
- **Fig. 3**: das eingesetzte Förderband bzw. den Zahnriemen im Schnitt.

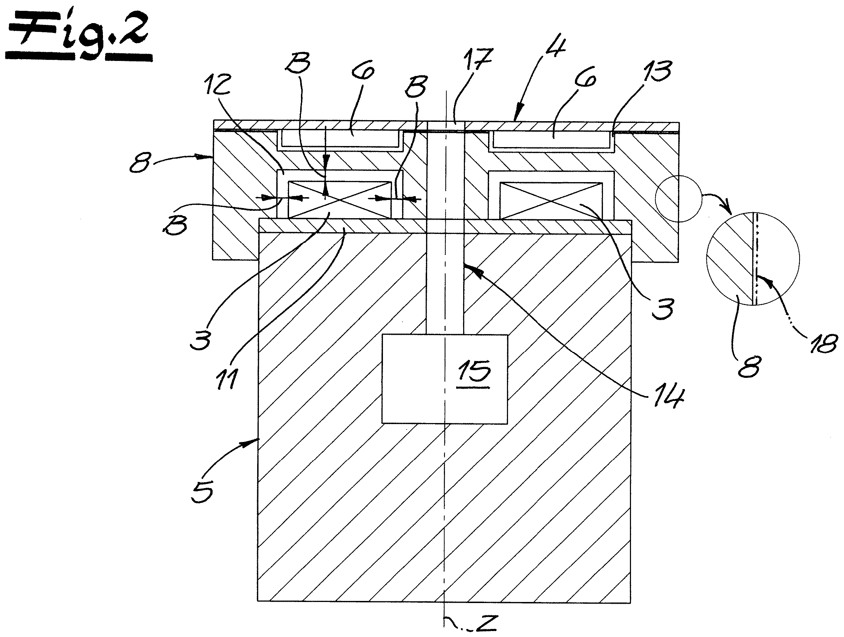

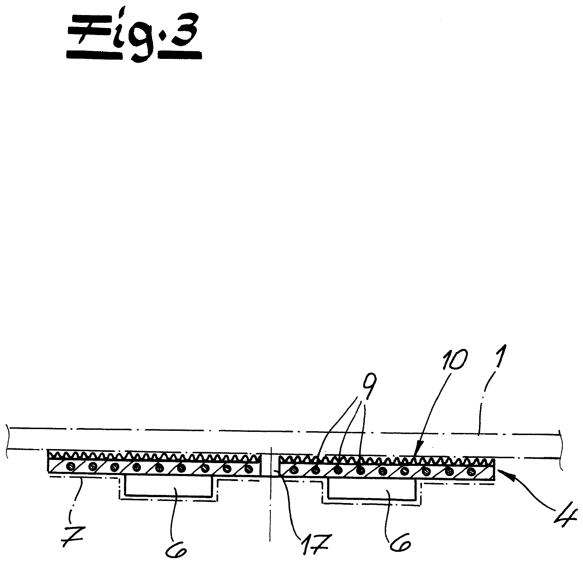

In den Figuren ist eine Fördereinrichtung dargestellt, die ausweislich der Schnittdarstellung in der Fig. 2 primär als Magnetfördereinrichtung ausgebildet ist, allerdings auch als kombinierte Magnet/Unterdruckfördereinrichtung arbeiten kann, wie dies gestrichelt in den Fig. 2 und 3 angedeutet wird.

Die Fördereinrichtung dient zum aufliegenden Transport von plattenförmigen Gegenständen 1, wie dies in der Fig. 1 angedeutet ist. Grundsätzlich ist natürlich auch ein hängender Transport möglich. Bei dem zu transportierenden Gegenstand 1 handelt es sich vorliegend um eine Stahlplatte 1, die mit Hilfe der nachfolgend noch näher zu beschreibenden Fördereinrichtung in Längsrichtung bzw. senkrecht zur Zeichenebene in der Fig. 2 in Förderrichtung F gefördert wird. Zusätzlich mögen noch Stützelemente 2 seitlich der Fördereinrichtung vorgesehen sein, die lediglich in der Fig. 1 angedeutet werden und selbstverständlich nicht zwingend sind.

Die in den Figuren wiedergegebene Fördereinrichtung verfügt über mehrere in der Förderrichtung F hintereinander angeordnete Magnethalteelemente 3, vorliegend Permanentmagnete handelt. Alternativ oder zusätzlich können auch schaltbare Elektromagnete zum Einsatz kommen, deren Magnetkraft ein- und ausgeschaltet werden kann. Dadurch lässt sich der plattenförmige Gegenstand 1 zielgenau von einem zugehörigen Förderband 4 abwerfen, sofern nicht der dargestellte aufliegende Transport der plattenförmigen Gegenstände 1, sondern vielmehr ein hängender und nicht dargestellter Transport verfolgt wird.

Bei einem Vergleich der Fig. 1 und 2 wird deutlich, dass an den Magnethalteelementen 3 insgesamt das Förderband 4 vorbeiläuft. Tatsächlich sind nach dem Ausführungsbeispiel in der Fig. 2 zwei Reihen an Magnethalteelementen 3 jeweils beabstandet und parallel zueinander in Längsrichtung verlaufend vorgesehen. Die Magnethalteelemente 3 sind an ein Maschinengestell 5 angeschlossen.

Bei dem Förderband 4 handelt es sich ausweislich der Fig. 3 um ein solches, welches mit mehreren auf seiner den zu transportierenden plattenförmigen Gegenständen 1 abgewandten Oberseite mit Zähnen 6 ausgerüstet ist. Die Zähne 6 greifen in zugehörige und in der Fig. 1 angedeutete Antriebselemente A ein. Bei den Antriebselementen A handelt es sich um Zahnräder bzw. Antriebsräder, welche umfangsseitig mit Taschen zur Aufnahme der fraglichen Zähne 6 ausgerüstet sind. Dementsprechend handelt es sich bei dem Förderband 4 um einen Zahnriemen. Da die plattenförmigen Gegenstände 1 ferromagnetisch ausgelegt sind, weil es sich um Stahlplatten handelt, werden sie von den in Förderrichtung F hintereinander angeordneten und ortsfest an das Maschinengestell 5 angeschlossenen Magnethalteelementen 3 angezogen. Für den Transport der plattenförmigen Gegenstände 1 sorgt das jeweilige Förderband 4. Im Rahmen des Ausführungsbeispiels verfügt das Förderband 4 an wenigstens seiner Oberseite über eine vollflächige und antistatische Beschichtung 7. Die vollflächige Beschichtung 7 deckt die gesamte Oberseite des Förderbandes 4 einschließlich der Zähne 6 gegenüber den Magnethalteelementen 3 ab.

Hinsichtlich der Auslegung der antistatischen Beschichtung 7 wird auf die zuvor bereits in Bezug genommene EP 2 576 403 B1 verwiesen. Tatsächlich kommt in diesem Zusammenhang ein spezielles Kunststoffgewebe zum Einsatz, welches einerseits günstige Reibverhältnisse zur Verfügung stellt und andererseits etwaige elektrostatische Aufladungen in Richtung auf das Maschinengehäuse 5 ableitet.

Man erkennt schließlich noch in der Fig. 3, dass in das Förderband bzw. seinen Gurtkörper Stahllitzen 9 eingebettet sind. Die Stahllitzen bzw. Stahlseile 9 werden von den Magnethalteelementen 3 angezogen und sorgen dafür, dass das Förderband 4 an ein Führungselement 8 angezogen wird. Das Führungselement 8 ist zwischen den Magnethalteelementen 3 und dem Förderband 4 angeordnet und sorgt primär für die Führung des Förderbandes 4. Schließlich erkennt man in der Fig. 3 noch eine zusätzliche Riffelung 10 an der Unterseite des Förderbandes 4 bzw. der den plattenförmigen Gegenständen 1 zugewandten Seite. Durch diese Riffelung 10 wird unter anderem sichergestellt, dass etwaige Verschmutzungen an den plattenförmigen Gegenständen 1 in Vertiefungen zwischen die Riffelung 10 verdrängt werden.

Das Führungselement 8 ist erfindungsgemäß als die Magnethalteelemente 3 mit Abstand B übergreifende Führungskappe 8 ausgebildet. Tatsächlich erkennt man in der Schnittdarstellung nach der Fig. 2, dass die Magnethalteelemente 3 zunächst einmal fest an das Maschinengestell 5 angeschlossen sind. Nach dem Ausführungsbeispiel ist hier eine Metallplatte bzw. Stahlplatte 11 zwischengeschaltet. Die Stahlplatte 11 sorgt für den magnetischen Rückschluss der von den jeweiligen Magnethalteelementen 3 ausgehenden Feldlinien.

Der durchgehende Abstand B zwischen dem jeweiligen Magnethalteelement 3 und der Führungskappe 8 sorgt dafür, dass die Führungskappe 8 von dem Maschinengestell 5 entfernt werden kann und zugleich die Magnethalteelemente 3 hiervon unbeeinflusst bleiben. Das heißt, bei einem etwaigen Austausch der Führungskappe 8 verbleiben die Magnethalteelemente 3 an Ort und Stelle.

Man erkennt, dass die Führungskappe 8 mit zumindest einem Aufnahmeraum 12 für die Magnethalteelemente 3 einerseits und einer Aussparung 13 für die hierin eingreifenden Zähne 6 des Förderbandes 4 ausgerüstet ist. Nach dem Ausführungsbeispiel liegen sich der Aufnahmeraum 12 und die Aussparung 13 jeweils gegenüber. Außerdem sind sowohl die Magnethalteelemente 3 als auch die die Magnethalteelemente 3 aufnehmenden Aufnahmeräume 12 ebenso wie die Aussparungen 13 für die Zähne 6 des Förderbandes 4 jeweils paarweise ausgebildet und insgesamt symmetrisch im Vergleich zu einer in der Fig. 2 angezeichneten Zentralebene Z orientiert. Die Größe des Aufnahmeraumes 12 für die Halteelemente 3 ist dabei so bemessen, dass der Abstand B seitlich und kopfseitig der Magnethalteelemente 3 beobachtet wird, die ihrerseits fußseitig an die Stahlplatte 11 angeschlossen sind.

Die Führungskappe 8 ist insgesamt als Führungskappenleiste 8 ausgebildet und mag über eine Länge von bis zu 10 m verfügen. Die einzelnen Magnethalteelemente 3 besitzen demgegenüber eine axiale Länge von 0,5 bis 0,6 m, so dass sich die Führungskappenleiste 8 über eine Vielzahl von Magnethalteelementen 3 in Längsrichtung erstreckt. Dadurch kann das Förderband 4 über die gesamte Länge der Führungskappenleiste 8 ohne Stoßstellen geführt werden, was auf die in der Beschreibungseinleitung bereits dargestellten Vorteile und den verringerten Verschleiß führt.

Die Führungskappe bzw. Führungskappenleiste 8 ist erfindungsgemäß aus stranggepresstem Aluminium hergestellt. Dadurch lässt sich die Führungskappe bzw. Führungskappenleiste 8 aufgrund ihres geringen Gewichtes im Bedarfsfall einfach austauschen. Außerdem lassen sich hierdurch unschwer einerseits der Aufnahmeraum 12 und andererseits die Aussparung 13 definieren. Tatsächlich können diese von vorneherein im stranggepressten Profil vorgesehen werden, lassen sich aber auch nachträglich einbringen.

Das gilt auch für eine Öffnung bzw. Bohrung 14, die in der Fig. 2 angedeutet ist und eine Verbindung zu einem Hohlraum 15 im Maschinengestell 5 herstellt. In dem Hohlraum 15 mag ein Unterdruck herrschen, so dass über die Bohrung 14 im Maschinengestell 5 und daran anschließend in der Stahlplatte 11 sowie der Führungskappe 8 auch unterseitig an den plattenförmigen Gegenständen 1 ein Unterdruck erzeugt werden kann. Dazu mündet die Bohrung 14 ausweislich der perspektivischen Darstellung in der Fig. 1 in jeweils Längsschlitze 16 oberhalb der Führungskappe 8, die mit zugehörigen Bohrungen 17 im Förderband 4 kommunizieren, wie dies in den Fig. 1 und 3 angedeutet ist. Die Bohrung 14 und auch die Längsschlitze 16 sind ebenso wie die Bohrungen 17 im Förderband 4 nicht zwingend erforderlich, sondern werden in der Regel nur dann benötigt, wenn eine kombinierte Magnet/Unterdruckfördereinrichtung realisiert werden soll. In diesem Fall ist das Halteelement 3 als kombiniertes Magnet-/Unterdruckhalteelement 3 ausgelegt, wie dies die Fig. 2 andeutet.

Um die Reibung zwischen der Führungskappe bzw. Führungskappenleiste 8 und dem hieran entlanggeführten Förderband 4 zu verringern, verfügt die Führungskappe 8 über eine reibungsmindernde Beschichtung 18. Das deutet die Schnittdarstellung in der Fig. 2 an. Hieraus kann man entnehmen, dass die Führungskappe bzw. Führungskappenleiste 8 an ihrer gesamten nach außen hin weisenden Oberfläche mit der fraglichen Beschichtung 18 ausgerüstet ist. Grundsätzlich reicht es aber auch aus, wenn die Führungskappe 8 mit der fraglichen reibungsmindernden Beschichtung 18 zumindest an ihrer dem Förderband 4 zugewandten Oberseite ausgerüstet ist.

Bei der reibungsmindernden Beschichtung 18 handelt es sich um eine solche, die mit einer Vickershärte von wenigstens 400 HV_{0,025} ausgerüstet ist. Nach der Erfindung handelt es sich bei der reibungsmindernden Beschichtung 18 um eine Oxidschicht, vorliegend eine Aluminiumoxidschicht, die elektrolytisch hergestellt worden ist, und/oder um eine Flammspritzschicht.

## Patentansprüche

1. Fördereinrichtung zum Transport von insbesondere plattenförmigen Gegenständen (1), mit mehreren in Förderrichtung (F) hintereinander angeordneten Magnethalteelementen (3), ferner mit zumindest einem an den Magnethalteelementen (3) vorbeilaufenden Förderband (4), und mit einem zwischen den Magnethalteelementen (3) und dem Förderband (4) angeordneten Führungselement (8) für das Förderband (4), wobei das Führungselement (8) als die Magnethalteelemente (3) mit Abstand (B) übergreifende Führungskappe (8) ausgebildet ist, **dadurch gekennzeichnet, dass** die Führungskappe (8) aus stranggepresstem Aluminium hergestellt und mit einer reibungsmindernden Beschichtung (18) zumindest an ihrer dem Förderband (4) zugewandten Oberseite ausgerüstet ist, wobei die reibungsmindernde Beschichtung (18) als Oxydschicht und/oder Flammspritzschicht ausgebildet ist.

2. Einrichtung nach Anspruch 1, **dadurch gekennzeichnet, dass** die Führungskappe (8) mit zumindest einem Aufnahmeraum (12) für ein oder mehrere Magnethalteelemente (3) ausgerüstet ist.

3. Einrichtung nach Anspruch 1 oder 2, **dadurch gekennzeichnet, dass** die Führungskappe (8) zumindest eine Aussparung (13) für hierin eingreifende Zähne (6) des Förderbandes (4) aufweist.

4. Einrichtung nach Anspruch 2 oder 3, **dadurch gekennzeichnet, dass** sich der Aufnahmeraum (12) und die Aussparung (13) gegenüberliegen.

5. Einrichtung nach einem der Ansprüche 1 bis 4, **dadurch gekennzeichnet, dass** die Führungskappe (8) als Führungskappenleiste (8) mit einer Länge von bis zu 10 m oder mehr ausgebildet ist.

6. Einrichtung nach einem der Ansprüche 1 bis 5, **dadurch gekennzeichnet, dass** die reibungsmindernde Beschichtung (18) eine Härte von wenigstens 50 HV_{0,025}, insbesondere von wenigstens 200 HV_{0,025}, und vorzugsweise von zumindest 400 HV_{0,025} aufweist.

7. Einrichtung nach einem der Ansprüche 1 bis 6, **dadurch gekennzeichnet, dass** die Oxidschicht elektrolytisch hergestellt ist.

## Claims

1. A conveying device for transporting in particular planar objects (1), having multiple magnetic holding elements (3) which are arranged one behind the other in the conveying direction (F), further having at least one conveyor belt (4) which runs past the magnetic holding elements (3), and having a guide element (8) for the conveyor belt (4), said guide element being arranged between the magnetic holding elements (3) and the conveyor belt (4), the guide element (8) being in the form of a guide cap (8) which fits over the magnetic holding elements (3) at a distance (B),
**characterised in that**
the guide cap (8) is produced from extruded aluminium and is provided with a friction-reducing coating (18), at least on its upper side facing the conveyor belt (4), wherein the friction-reducing coating (18) is in the form of an oxide layer and/or a flame-sprayed layer.

2. The device according to Claim 1, **characterised in that** the guide cap (8) is provided with at least one receiving space (12) for one or more magnetic holding elements (3).

3. The device according to Claim 1 or 2, **characterised in that** the guide cap (8) has at least one cut-out (13) for teeth (6) of the conveyor belt (4) which engage therein.

4. The device according to Claim 2 or 3, **characterised in that** the receiving space (12) and the cut-out (13) are opposite each other.

5. The device according to any one of Claims 1 to 4, **characterised in that** the guide cap (8) is in the form of a guide cap strip (8) having a length of up to 10 m or more.

6. The device according to any one of Claims 1 to 5, **characterised in that** the friction-reducing coating (18) has a hardness of at least 50 HV_{0.025}, in particular of at least 200 HV_{0.025}, and preferably of at least 400 HV_{0.025}.

7. The device according to any one of Claims 1 to 6, **characterised in that** the oxide layer is produced electrolytically.

## Revendications

1. Dispositif de convoyage, destiné à transporter des objets (1) notamment en forme de plaques, pourvu de plusieurs élément de maintien aimantés (3), placés les uns derrière les autres dans la direction de convoyage (F), pourvu par ailleurs d'au moins une bande de convoyage (4) passant à l'avant des éléments de maintien aimantés (3) et pourvu d'un élément de guidage (8) pour la bande de convoyage (4), placé entre les éléments de maintien aimantés (3) et la bande de convoyage (4), l'élément de guidage (8) étant conçu sous la forme d'une calotte de guidage (8), chevauchant les éléments de maintien aimantés (3) avec un écart (B), **caractérisé en ce que** la calotte de guidage (8) est fabriquée en aluminium extrudé et est équipée au moins sur sa face avant qui est dirigée vers la bande de convoyage (4) d'un revêtement (18) réduisant le frottement, le revêtement (18) réduisant le frottement étant conçu sous la forme d'une couche en oxyde ou d'une couche projetée à la flamme.

2. Dispositif selon la revendication 1, **caractérisé en ce que** la calotte de guidage (8) est équipée d'au moins un espace de logement (12) pour un ou plusieurs éléments de maintien aimantés (3).

3. Dispositif selon la revendication 1 ou 2, **caractérisé en ce que** la calotte de guidage (8) comporte au moins une encoche (13) pour des dents (6) de la bande de convoyage (4) qui s'y engagent.

4. Dispositif selon la revendication 2 ou 3, **caractérisé en ce que** l'espace de logement (12) et l'encoche (13) sont placés en regard l'un de l'autre.

5. Dispositif selon l'une quelconque des revendications 1 à 4, **caractérisé en ce que** la calotte de guidage (8) est conçue en tant que linteau à baguette de guidage (8), d'une longueur de jusqu'à 10 m ou plus.

6. Dispositif selon l'une quelconque des revendications 1 à 5, **caractérisé en ce que** le revêtement (18) réduisant le frottement fait preuve d'une dureté d'au moins 50 HV_{0,025}, notamment d'au moins 200 HV_{0,025} et de préférence, d'au moins 400 HV_{0,025}.

7. Dispositif selon l'une quelconque des revendications 1 à 6, **caractérisé en ce que** la couche d'oxyde est fabriquée par voie électrolytique.
